# EUROPEAN PATENT APPLICATION

(11) **EP 1 303 131 A1**
(43) Date of publication of application: **16.04.2003**
(21) Application number: 02079146.3
(22) Date of filing: 07.10.2002
(51) Int. Cl.: H04N 1/21

(54) **Digital camera and camera data exchange system with dual data bus**

(30) Priority: 16.10.2001 US 978894
(71) Applicant: EASTMAN KODAK COMPANY, Rochester, New York 14650 (US)
(72) Inventor: Janson Jr., Wilbert F., Eastman Kodak Company, Rochester, New York 14650-2201 (US)
(74) Representative: Haile, Helen Cynthia

(57) **Abstract**

The camera data exchange system (18) comprises a camera and an external electronic device (50) with an external surface (55) and a plurality of electrodes (E1-En); a camera housing is provided defining a port (44) adapted to engage the external surface (55). Disposed within the housing are an electronic image capture system (21); a memory (40); and a data transfer bus (38) having a plurality of lines for data transfer between the electronic image capture system (21) and the memory (40). The external surface (55) and the port (44) are arranged so that the electrodes (E1-En) are connected to selected lines of the data transfer bus (38) when the port (44) engages the external surface of the connector to permit data communication between the external device (50) and the memory (40).

## Description

The present invention relates to digital and hybrid film/cameras adapted to export electronic image data and metadata to an external device.

In many digital and hybrid cameras, data is transmitted between an image capture system and a memory using a multiplicity of parallel data lines and a communication protocol that is adapted for parallel communication. This permits rapid transfer of data during image capture. However, external devices such as personal computers and computer networks are not typically adapted to exchange data in this manner.

Accordingly, such digital and hybrid cameras are specially adapted to communicate with external devices using different communication protocols preferred by the external devices. In such cameras, a camera controller is used to extract data from a memory using the parallel data lines and parallel communication protocol. The camera controller transforms this data into a digital data stream formatted in accordance with the communication protocol preferred by the external device. The controller then transmits this digital data stream to an external device using separate data lines that are connected between the controller and a camera data port to which the external device is attached.

An example of such an arrangement is found in cameras that are adapted to exchange data using the currently popular Universal Serial Bus (USB) technology. USB defines specifications for serial communication hardware and a common communication protocol for exchanging data using the communication hardware. In USB compatible cameras, the exchange of data between the memory and the external device is controlled by the camera microcontroller. However, using the camera microcontroller to control the process of uploading data from the memory to the external device complicates the process of exchanging data with the external device and causes the camera to expend precious battery power when data is exchanged. Where a significant amount of data is to be exchanged, a substantial portion of the battery life of the camera can be exhausted. Further, use of the camera controller to exchange data between the memory and the external device complicates data transfer. In addition, in many cases, the camera controller is manually instructed to enter into a communication mode requiring additional software programming and additional hardware such as a mode selector switch.

In certain digital and hybrid cameras these problems are avoided by storing the image data on removable memory cards including but not limited to compact flash memory cards that comply with standards set forth by the Personal Computer Memory Card International Association (PCMCIA). To transfer data from the camera to an external device, the memory card is physically removed from the camera and then inserted into a memory drive of the external electronic device such as a PCMCIA drive After the memory card is inserted into the memory drive of the external device, software on the external device extracts the images from the memory card and processes the images in accordance with the programming of the external device. In U.S. Pat. No. 6,182,162 a memory card is described that is equipped with 50 pins for data exchange and memory control. The memory card monitors electrical conditions at the pins and selects a mode of operation that is consistent with the electrical conditions at the pins. For example, where one configuration of pins is sensed by the memory, the memory driver exchanges data using a USB protocol and where a second configuration of electrical connections is detected, the card can exchange data using PCMCIA and other protocols. In the ' 162 patent however, the mode of operation of the memory is changed by physically removing the memory card from a camera connector having a first set of electrical connections, and inserting the memory card into a connector in a computer or other external device having a different set of electrical connections.

It will be appreciated that it is inconvenient to require the user of a camera to remove the digital memory from the camera and insert the memory card into a memory drive on an external device such as a computer. Further, such a task may be intimidating for novice camera users. Repeated insertion and removal of memory cards can also create a risk of damaging the camera and the memory card.

In some digital or hybrid cameras, a portion of the memory on the memory card is used for storing camera software and/or for storing other data such as user preferences or a portfolio of images that the user desires to remain with the camera. In such cameras, the memory card having the software or other data is subject to replacement by a memory card that does not have this software or other data stored on the memory card. Such a camera must include a non-volatile memory in addition to the memory on the card in order to ensure that such data is not lost when memory cards are changed. This increases the cost and complexity of the camera.

Thus, while the present digital and hybrid cameras are capable of exporting data from cameras in a way that is effective and accomplishes the desired result, there is a need for digital and hybrid cameras that download images to a computer in a way that reduces the number of data lines and other components in the camera, that does not require the use of a camera microcomputer to download images and that does not require the insertion and removal of memory cards.

According to one feature of the present invention, a camera is provided that is adapted for data communication with an external device having electrodes, the camera comprises a camera housing defining a port for engaging the external device. Disposed within the housing are an electronic image capture system to provide data; a memory to store the data; a data transfer bus having a plurality of lines for data transfer between the electronic image capture system and the memory. A plurality of taps are connected between respective lines of the data transfer bus and the port to contact selected electrodes, when the port and external device are engaged, to permit data communication between the external device and the memory.

According to another feature of the present invention, a camera data exchange system is provided. The camera data exchange system comprises an external electronic device with an external surface and a plurality of electrodes; a camera housing is provided defining a port adapted to engage the external surface. Disposed within the housing are an electronic image capture system; a memory; and a data transfer bus having a plurality of lines for data transfer between the electronic image capture system and the memory. The external surface and the port are arranged so that the electrodes are connected to selected lines of the data transfer bus when the port engages the external surface of the connector to permit data communication between the external device and the memory.

Fig. 1 shows a schematic diagram of an embodiment of the camera and camera data exchange system of the present invention operated in an image capture mode.

Fig. 2 shows a schematic diagram of an embodiment of the camera and camera data exchange system of the present invention operated in a data exchange mode and with a computer physically connected to the camera.

Fig 3 shows a schematic diagram of another embodiment of the camera and camera data exchange system of the present invention operated in a data storage mode.

Fig. 4 shows the embodiment of Fig. 3 operated in a data exchange system mode.

Fig. 5 shows another embodiment of the camera and camera data exchange system of the present invention operated in a data storage mode.

Fig. 6 shows the embodiment of Fig. 5 operated in a data exchange system mode.

Fig. 7 shows another embodiment of a camera and camera data exchange system of the present invention operated in a data storage mode.

Fig. 8 shows the embodiment of Fig. 7 operated in a data exchange system mode.

Fig. 9 shows another embodiment of a camera and camera data exchange system of the present invention operated in a storage mode.

Fig. 10 shows the embodiment Fig. 9 operated in a data exchange system mode.

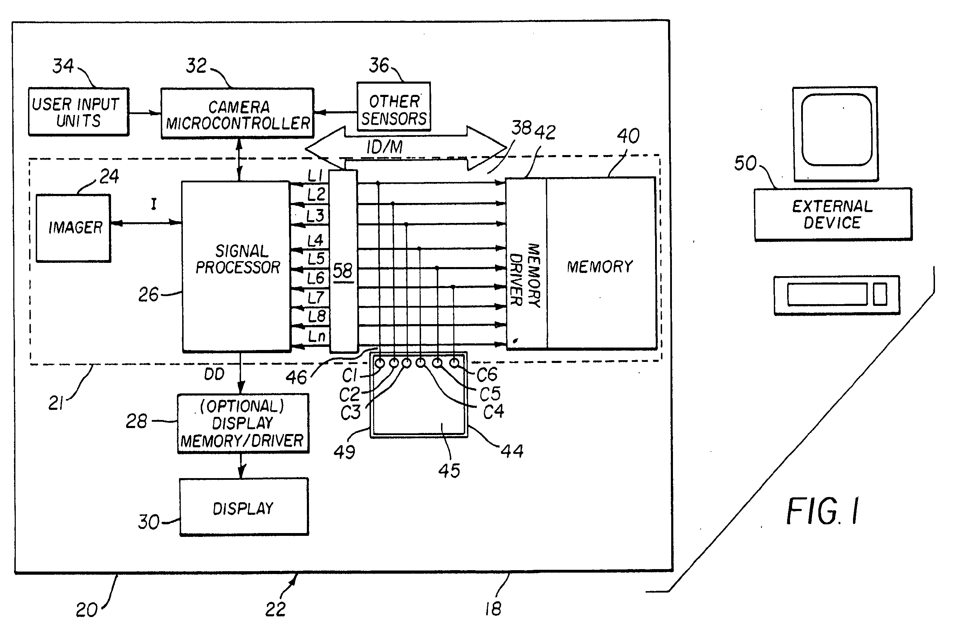

Fig. 1 shows a schematic diagram of one embodiment of a camera 20 of the present invention. As is shown in Fig. 1, camera 20 comprises a body 22 containing an image capture system 21 having an imager 24, a signal processor 26 and optional display memory/driver 28 and a display 30. During image capture, imager 24 acts to convert light from a scene into a signal I representing an image of the scene. Imager 24 can comprise a charge couple device (CCD), a CMOS imager or any electronic imager known to those of ordinary skill in the art for converting light into a signal I representing an image. In this regard, signal I can be an analog or digital signal.

Signal processor 26 receives signal I from imager 24. Signal I can be in digital or analog form. Display 30 can be either a digital or an analog display. Signal processor 26 converts image signal I into a format that is appropriate for presentation on display 30. The converted image signal is referred to herein as display data DD. For example, where display 30 is a digital display, display data DD will comprise a digitally encoded signal. Digitally encoded display data DD is transmitted to an optional display memory/driver 28 which can be used to drive display 30. Alternatively, display data DD can be transmitted in a form that directly operates display 30. Where this is done, display memory/driver 28 can be omitted.

Signal processor 26 also transforms signal I from imager 24 into image data ID. Where signal I is in the form of an analog signal, signal processor 26 converts this analog signal into a digital form. Signal processor 26 can also apply image processing actions to the image signal I. These include color and exposure balancing, interpolation and compression.

Camera microcontroller 32 controls the operation of the image capture system 21, imager 24, signal processor 26 and memory 40 during imaging operations and causes imager 24, signal processor 26, display 30 and memory 40 to capture, store and display images in response to signals received from user inputs units 34, data from signal processor 26 and other sensors 36. User input units 34 can comprise, for example, a camera shutter release switch (not shown), a keypad (not shown), a data entry device (not shown), or a mode select switch (not shown). Other sensors 36 can include light sensors, range finders and other camera sensors.

Camera microcontroller 32 receives signals from signal processor 26, camera user inputs 34 and other sensors 36 and, optionally, generates metadata M. Metadata M can include capture related photographic information such as light conditions at the time the photograph is taken, the date, time and location an image was captured, an image title, and editing instructions. In addition, metadata M can also include sound and motion data. Where camera 20 is a hybrid film/digital camera, camera microcontroller 32 uses memory 40 to store film image metadata such as film type, the contents of each frame on the filmstrip, the film identification number and other information related to the filmstrip on which a film image has been captured. Further, in hybrid cameras, metadata M can include photofinishing and editing instruction for improving the appearance of images made based upon the latent images recorded on the film.

Image data ID and metadata M are stored in memory 40. In this regard, signal processor 26 and camera microcontroller 32 transmit this data to memory 40 using the data transmission lines L1 - Ln of bus 38. In the embodiment shown, memory 40 has a memory driver 42. Memory driver 42 is operable in a first mode that receives image data ID and metadata M and that stores image data ID and metadata M in memory 40. Memory 40 can comprise what is known in the art as a flash memory or other type of non-volatile memory. Preferably, memory 40 is fixed within camera body 22. However, camera 20 can be adapted so that the user can exchange memory 40 with other memory for example to increase the data storage capacity in camera 20.

In the embodiment shown, metadata M is generated by camera microcontroller 32 and transmitted to memory 40 by way of signal processor 26 and data bus 38. However, it will be appreciated that data bus 38 can be directly connected to camera microcontroller 32 by way of branch lines (not shown) which define a path between camera microcontroller 32 and memory 40. Certain of bus lines L1 - Ln are used to control and provide power to memory 40 while others are used to transmit image data ID and metadata M to memory 40. In the image capture mode, a plurality of parallel data lines, e.g. lines L3 - Ln, are used for data transfer. This increases the rate at which images captured by camera 20 can be stored in memory 40.

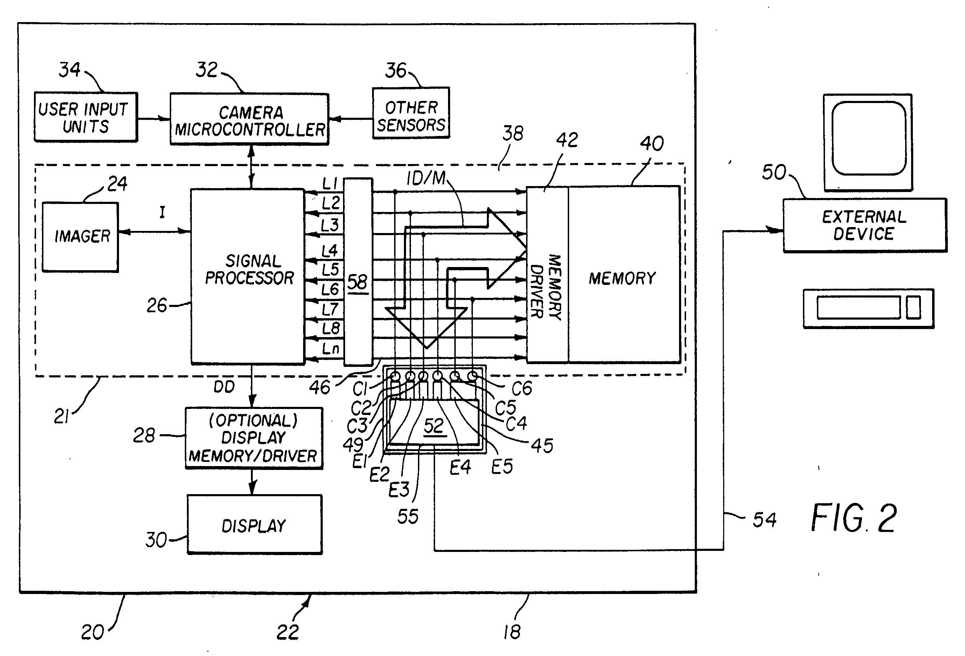

As is shown in Figs. 1 and 2, camera body 22 has a port 44 that is adapted to permit a physical connection between a camera 20 and a connector 52 from external device 50. In this regard, port 44 defines an opening 45 in camera body 22 and a surface 49 to engage an external surface 55 of connector 52 to securely mount connector 52 to camera body 22. Selected ones of data lines L1 - Ln are provided with taps 46. Taps 46 form contacts C1 - C6 at port **44** and thus provide an electrical connection between the selected ones of data lines L1 - Ln and port 44.

External device 50 is connected to camera 20 when connector 52 is plugged into port 44. Contacts C1 - C6 are arranged at port 44 for engagement by electrodes E1 - E5 of electrical connector 52. In this regard, electrodes E1 - E5 and contacts C1 - C6 are arranged so that when surface 49 of port 44 engages exterior surface 55 of connector 57, contacts C1 - C6 engage electrodes E1 - E5. This forms an electrical connection between external device 50, electrodes E1 - E5, taps 46, lines L1 - L6 and memory 40.

In the embodiment shown in Figs. 1 and 2, electrodes E1 - E2 are shown connected to lines L1 and L2 by way of contacts C1 and C2 and taps 46. Lines L1 and L2 provide electrical power from external device 50 to operate memory 40. In this embodiment, memory 40 is activated by the application of power across lines L1 and L2. Electrodes E3 and E4 are shown connected to lines L3 and L4. Lines L3 and L4 are data transfer lines. The connection between electrodes E3 and E4 and lines L3 and L4 permits image data ID and metadata M to be transferred to and from memory 40 across data cable 54 to external device 50. In this way, image data ID and metadata M can be extracted from camera 20 without using camera microcontroller 32 and without requiring removal of memory 40 from camera body 22. Such communication can be conducted using a parallel protocol or serial protocol.

Memory 40 is equipped with an optional memory driver 42. Memory driver 42 is operable in one of two modes during imaging operations - a first mode for exchanging data with signal processor 26 and a second mode for downloading or otherwise exchanging data with external device 50. In the example shown, memory driver 42 is adapted to communicate in a first mode using lines L3 - Ln of bus 38. This provides a parallel data communication path in order to provide rapid exchange of data between signal processor 26 and memory 40. When memory driver 42 is operated in a second mode, communication is effected in serial format. For example, memory 40 can comprise a USB Enabled Compact Flash of the type described in the '162 patent. The memory card of the '162 patent has an on board memory driver 42 that permits memory card 36 to exchange data using the USB data communication protocol.

In the embodiment shown in Figs. 1 and 2, memory driver 42 selects between the data communication protocols based on electrical conditions on lines L1 - Ln. In the embodiment shown in Fig. 2, memory 40 includes two USB enable lines. Memory driver 42 detects when an electrical connection is established between memory lines L5 and L6. When the electrical connection is established, memory driver 42 causes data to be exchanged in a manner consistent with the USB protocol. In this embodiment, electrical connector E5 provides the electrical connection between lines L5 and L6. Signal processor 26 and camera microcontroller 32 can also be optionally adapted to detect an electrical connection between lines L5 and L6. In response to detecting such an electrical connection, signal processor 26 and camera microcontroller 32 can suspend image capture and storage activities and can provide the user with an indication that the connection has been made. Signal processor 26 and/or camera microcontroller 32 can also be disabled in response to an electrical connection between lines L5 and L6.

Alternatively, the mode of operation of memory driver 42 can be selected by camera signal processor 26 or camera microcontroller 32 or external device 50. Any one of these devices can be adapted to transmit a mode selection signal to memory driver 42. In this alternative, memory driver 42 selects a mode of operation based upon this mode selection signal.

Also shown in Figs. 1 and 2 is an optional buffer 58. Buffer 58 is used to protect signal processor 26 and camera microcontroller 32 from damage that can occur in the unlikely event that the connection between external device 50 and Lines L1 - Ln results in a discharge of harmful amounts of static or other electrical energy. Although this embodiment shows that buffer 58 provides protection for each of lines L1 - Ln, it will be appreciated that similar benefits can be obtained simply by providing buffer 58 only for those lines L1 - Ln that engage electrodes E1 - E5 of external device 50.

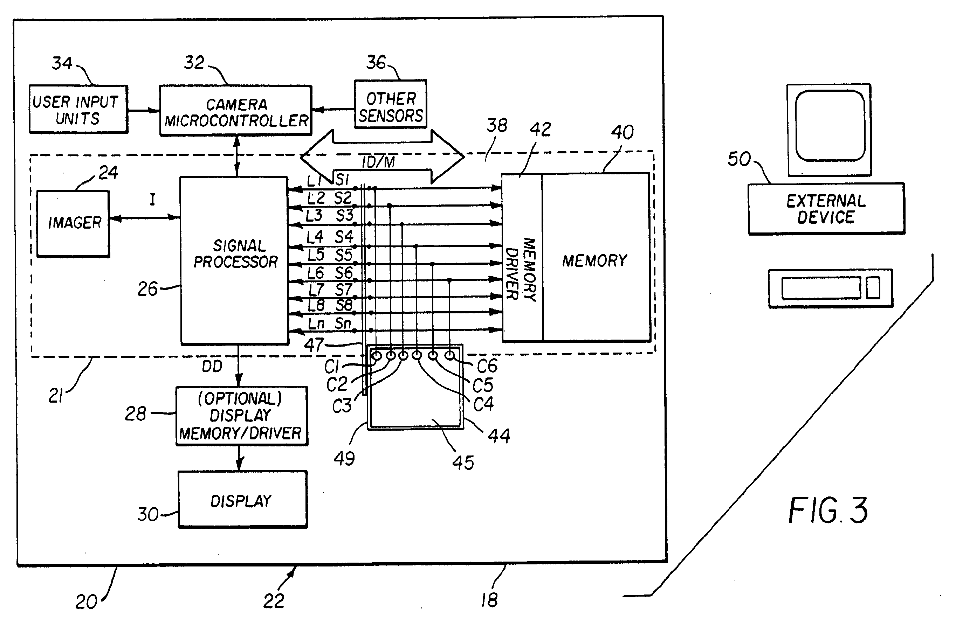

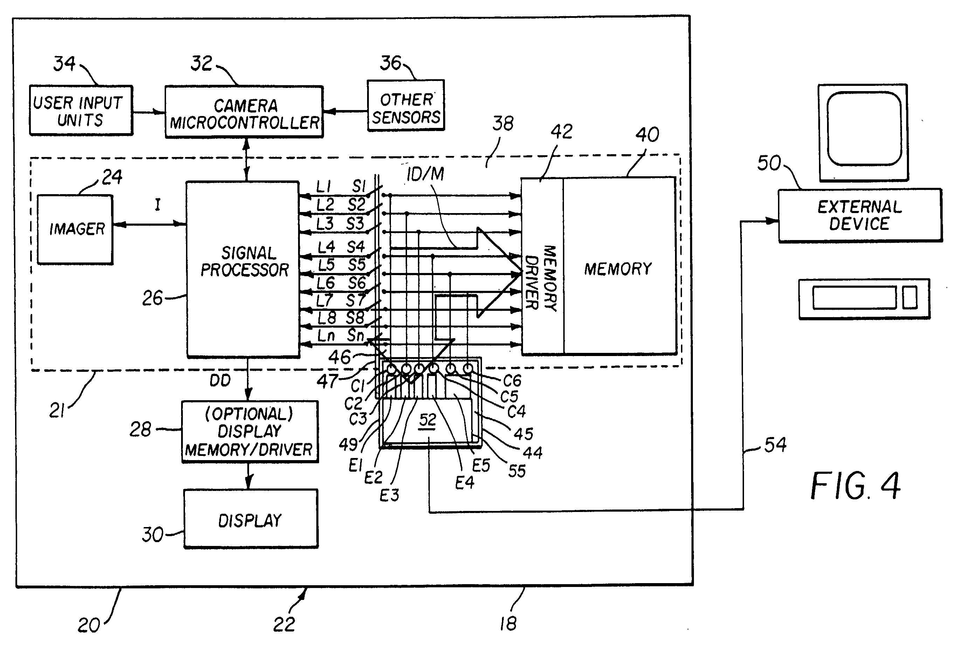

Figs. 3 and 4 show another embodiment of camera 20. In this embodiment, switches S1 - Sn are shown connected on lines L1 - Ln. As is shown in Fig. 4, an actuator 47 such as a shaft or optical, mechanical or electrical actuator opens switches S 1 - Sn when connector 52 is plugged into port 44. Switches S1 - Sn can be mechanical, electrical or solid state devices. This electrically isolates the signal processor 26 and/or camera microcontroller 32 from the data bus L1 - Ln. Switches S1 - Sn, protect signal processor 26 and camera microcontroller 32 from damage that can occur in the unlikely event that the connection between external device 50 and memory 40 results in a discharge of harmful amounts of static or other electrical energy. Switches S1 - Sn also serve the purpose of preventing the signal processor 26 or camera microcontroller 32 from interfering with data transfer between external device 50 and memory 40.

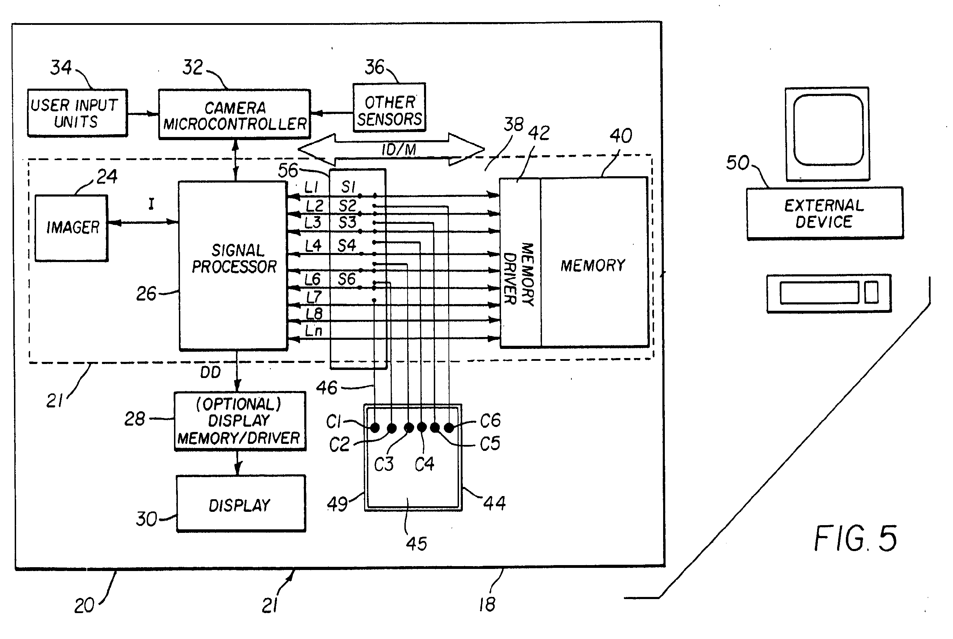

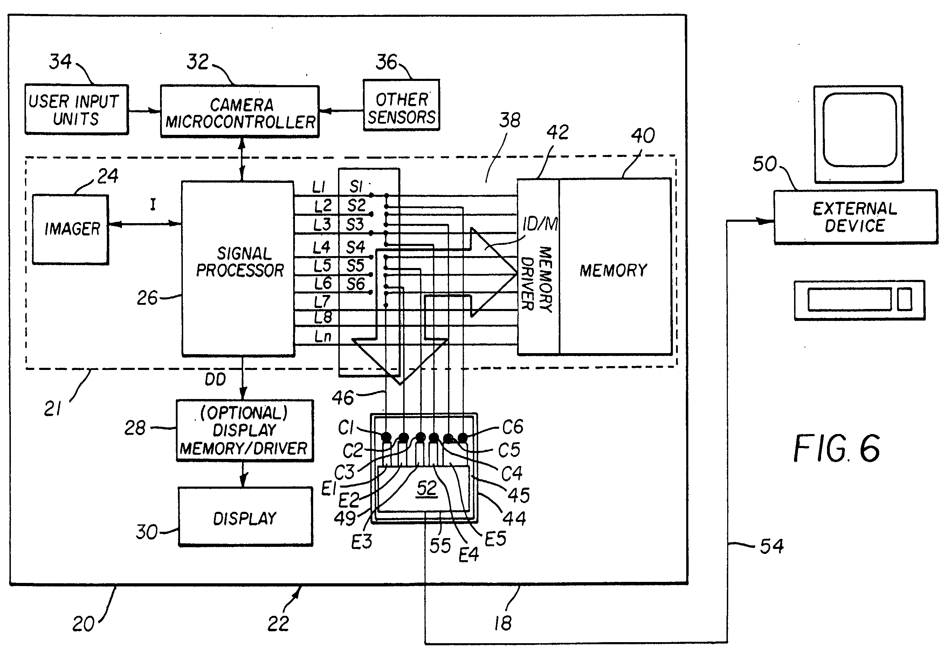

Figs. 5 and 6 show another embodiment of camera 20 wherein camera 20 further comprises a relay 56 operating switches S 1 - S6. Relay 56 can comprise an electro-optical, electronic, electromechanical or other conventional relay. In this embodiment, relay 56 has a first mode that closes each of switches S1 - S6 during data storage. As is shown in Fig. 6, during data exchange operations, relay 56 opens each of switches S1 - S6 and connects each of data lines L1 - L6 to appropriate ones of taps 46. Relay 56 is normally maintained in the first mode and transitions to the second mode when connector 52 is inserted into port 44. Although this embodiment shows that relay 56 operates switches S 1 - S6 that are provided for each of lines L1 - L6 which are the lines used for communication with external device 50, it will be appreciated that additional switches can be operated by relay 56 to further electrically isolate memory 40 from signal processor 26 and/or camera microcontroller 32.

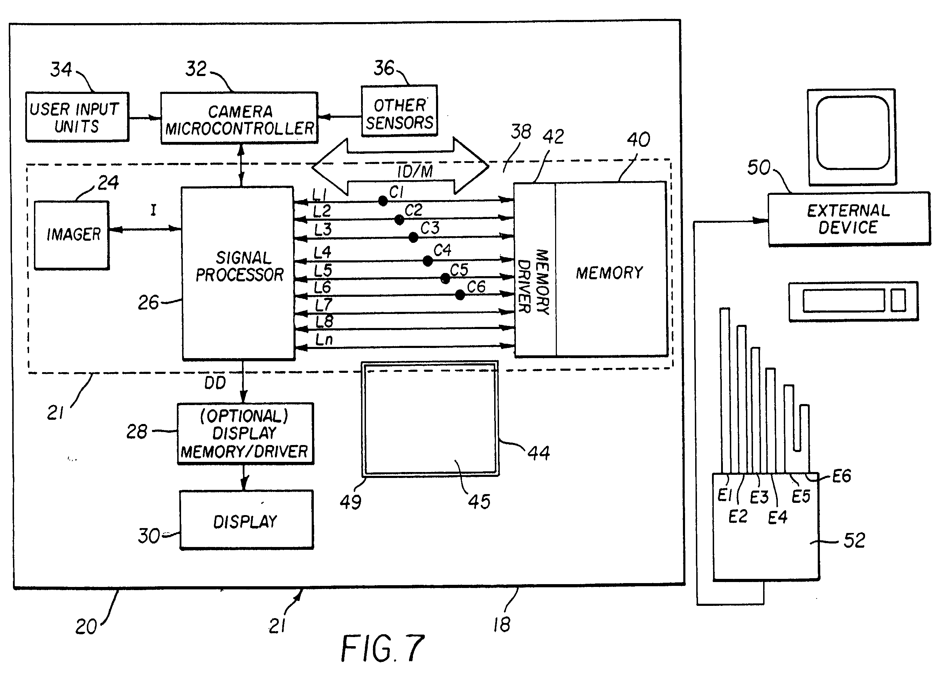

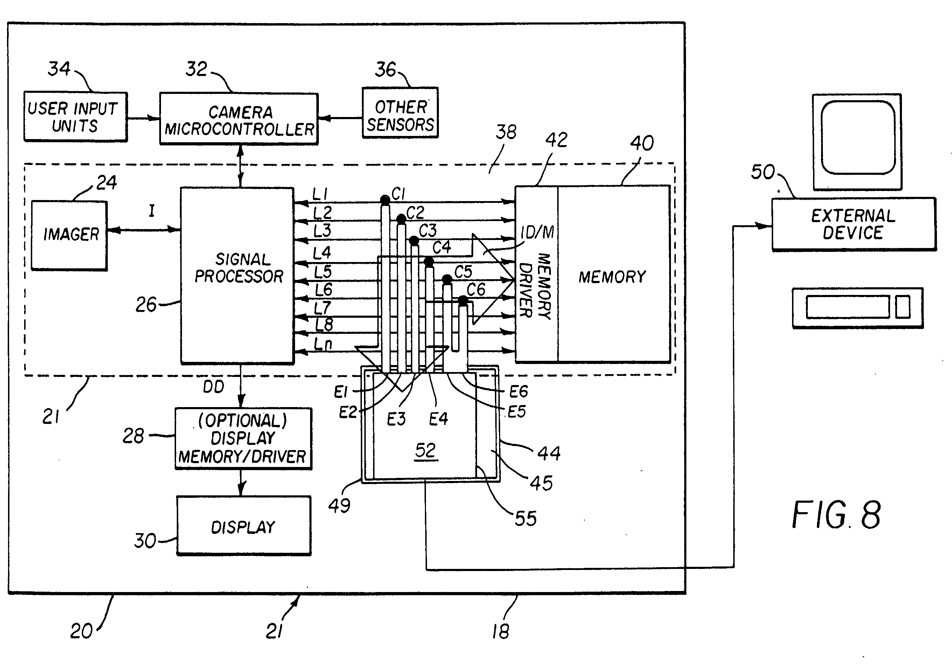

Figs. 7 and 8 show still another embodiment of camera 20 and camera data exchange system 18 of the present invention. As is shown in Fig. 7, contacts C1 - C6 are located on data lines L1 - L6, while port 44 comprises an opening in camera body 22 that is adapted to engage connector 52 of external device 50. In this embodiment, connector 52 defines electrodes E1 - En. As is shown in Fig. 8, when connector 52 is plugged into port 44, electrodes E1 - En extend into camera body 22 to contact on lines L1 - Ln. This creates an electrical connection between external device 50 and lines L1 - Ln.

Memory driver 42 can also be adapted to exchange image data ID and metadata M between memory 40 and signal processor 26 using multiple serial communication signals transmitted using bus lines 38. The camera data exchange system 18 and camera 20 of the present invention can have electrodes E1 - En to define an electrical data communication path between external device 50 and memory driver 42 to support exchange of data using this protocol.

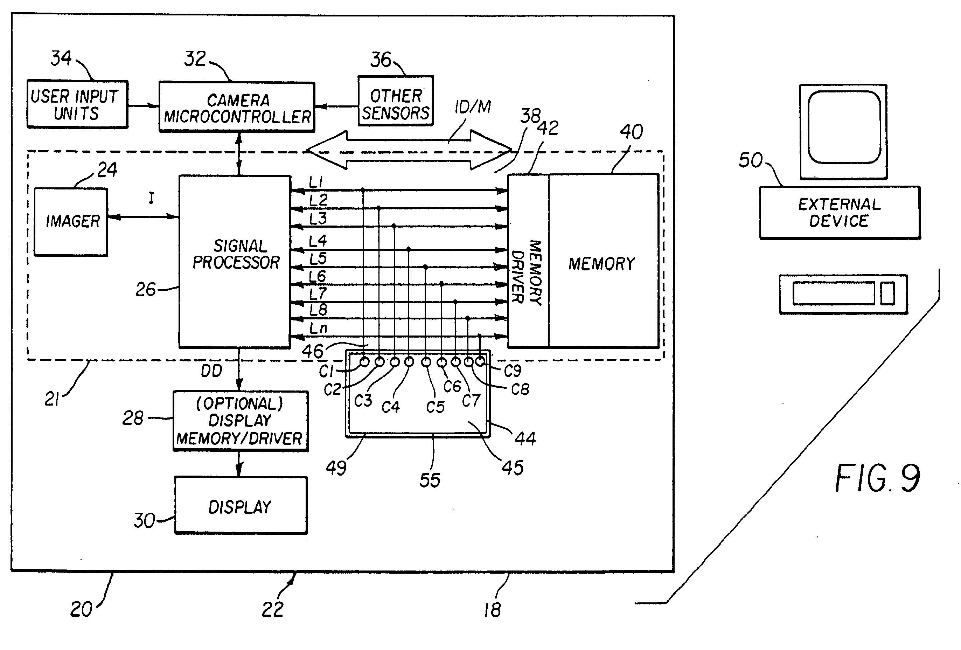

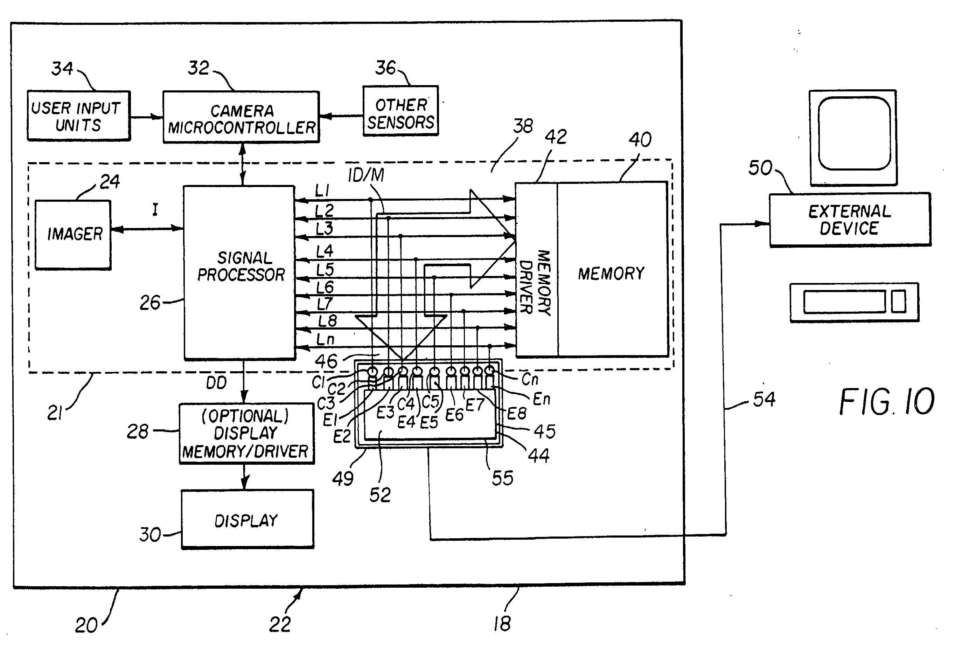

While the embodiments described above have described the use of a memory 40 comprising a non-volatile memory having a memory driver 42 such as that found in the '162 patent, it will be appreciated that other non-volatile memories can be used. For example, in the embodiment shown in Fig. 9 a camera 20 and camera data exchange system 18 are adapted for communication with a memory driver 42 that is operable in a single mode. In this single mode of communication each of lines L3 - Ln is used for data communication. As is shown in Fig. 10, where a single mode memory driver 42 is used, the connector 52 will connect to bus lines 38 by way of taps 46 and connectors C1-Cn. This defines a data path between memory 40 and external device 50 that can be used to exchange data in the same way that data is exchanged between memory 40 and signal processor 26. External device 50 incorporates a communication driver to communicate with memory 40 over this data path using an appropriate protocol. The communication driver at external device 50 can comprise executable software or a firmware device (not shown).

Memory driver 42 can also be adapted to exchange image data ID and metadata M between memory 40 and signal processor 26 using multiple serial communication signals transmitted using bus lines 38. In a camera data exchange system 18 and camera 20 using multiple serial communication signals, electrodes E1 - En, taps 46 and/or contact C1 - Cn can be adapted to define an electrical data communication path between external device 50 and memory 40 to support exchange of data in this manner using this protocol.

## Claims

1. A camera (20) adapted for data communication with an external device (50) having electrodes (E1-En), the camera comprising:
a camera housing defining a port (44) for engaging the external device and, disposed within the housing,
an electronic image capture system (21) to provide data;
a memory (40) to store the data;
a data transfer bus (38) having a plurality of data lines (L1-Ln) for data transfer between the electronic image capture system (21) and the memory (40), and
a plurality of taps (46) with the taps (46) connected between respective data lines (L1-Ln) of the data transfer bus (38) and to the port (44) to contact selected electrodes (E1-En) when the port (44) and the external device (50) are engaged, to permit data communication between the external device (50) and the memory (40).

2. The camera of claim 1 wherein the memory comprises a memory driver adapted for communication in more than one data communication protocol.

3. The camera of claim 2, wherein the memory driver is adapted to select one of the more than one data communication protocol based upon the signals received at the data transfer bus and the memory.

4. The camera of claim 1, further comprising a plurality of switches disposed between the taps and the electronic image capture system and wherein the switches are adapted to open when the camera engages an external device.

5. The camera of claim 1, further comprising a relay having a first position directing data communications along lines of the data transfer bus between the electronic image capture system and the memory and a second position directing data communications along the lines of the data transfer bus between the memory and the taps.

6. The camera of claim 5, wherein the relay is biased into the first position and wherein connection of the external device and the camera biases the relay into the second position.

7. A camera data exchange system comprising:
an external electronic device with an external surface having a plurality of electrodes;
a camera housing defining a port for engaging the external surface, and disposed within the housing,
an electronic image capture system providing data;
a memory storing the data;
a data transfer bus having a plurality of data lines for data transfer between the electronic image capture system and the memory, and
a plurality of taps with the taps connected between respective lines of the data transfer bus and to the port to contact selected electrodes, when the port and the external device are engaged, to permit data communication between the external device and the memory.

8. The camera data exchange system of claim 7, further comprising a film image capture system.

9. The camera data exchange system of claim 8, wherein the data includes data regarding the images recorded on the film.

10. A camera data exchange system comprising:
an external electronic device having a communication connector with an external surface and a plurality of electrodes;
a camera housing defining a port adapted to receive the external surface of the communication connector , and disposed within the housing:
an electronic image capture system;
a memory; and
a data transfer bus having a plurality of data lines for data transfer between the electronic image capture system and the memory,
wherein the external surface and the port are arranged so that the electrodes are connected to selected lines of the data transfer bus to permit data communication between the external device and the memory.
